# EUROPEAN PATENT APPLICATION

(11) **EP 4 818 886 A1**
(43) Date of publication of application: **07.10.2026**
(21) Application number: 26166187.0
(22) Date of filing: 19.03.2026
(51) Int. Cl.: G06F 8/30, G06F 8/41, G06F 16/242, G06F 21/12, G06N 3/042, G06N 20/00

(54) **SYSTEMS AND METHODS FOR GENERATING SECURED DATA SAMPLES FOR EXECUTING SECURED COMPUTER NETWORK FUNCTIONS**

(30) Priority: 19.03.2025 US 202563774707 P; 19.05.2025 US 202519212592
(71) Applicant: Capital One Services, LLC, McLean, Virginia 22102 (US)
(72) Inventor: SHINDE, Swapnil, McLean, 22102 (US); LUO, Andy, McLean, 22102 (US); WADHWA, Sahil, McLean, 22102 (US); GUPTA, Akshay, McLean, 22102 (US); SOROWER, Mohammad, McLean, 22102 (US)
(74) Representative: Boult Wade Tennant LLP

(57) **Abstract**

Systems and methods are described herein for generating secured data samples for executing secured computer network functions. For example, data samples-such as code samples-for executing secured computer network functions may be snippets of code or structured data that demonstrate how to perform operations securely within a networked environment. The data sample may describe how to navigate a computer network and access one or more applications to authenticate an API, obtain an access token, and/or request external information in response to a user request.

## Description

### BACKGROUND

Computer networks have expanded dramatically in both scale and complexity over the past few decades, evolving from isolated, static systems into globally interconnected, dynamic infrastructures that underpin nearly all aspects of modern society. Initially limited to small local area networks (LANs) and basic client-server models, networks now span vast geographic regions, integrating cloud services, mobile devices, edge computing nodes, and the Internet of Things (IoT). This expansion has introduced a surge in the number and diversity of connected devices, communication protocols, and data flows, all of which must be managed in real time and often across multiple administrative domains. The complexity of computer networks has grown in parallel with this expansion. Modern networks must support not only higher bandwidth and lower latency, but also advanced requirements such as end-to-end encryption, multi-layered security policies, dynamic routing, service orchestration, and workload distribution across hybrid cloud and on-premises systems.

Moreover, generating action plans that require coordination of multiple functions and components-such as application programming interface (API) calls, data source requests, edge server executions, and more-across a computer network is technically challenging due to several interrelated factors. First, such plans involve distributed execution, meaning tasks must be orchestrated across geographically and logically separated systems, each potentially governed by different protocols, latencies, and failure modes. Ensuring reliable sequencing, dependency resolution, and synchronization among these components is inherently complex. For instance, an action plan might require an authentication API to validate credentials, a database to return user-specific records, and an edge server to personalize and deliver content-all of which must occur in the correct order, within tight time constraints, and without violating security policies. Second, there are heterogeneity and interoperability challenges. Different components may use varied data formats, communication standards (e.g., REST, gRPC, WebSockets), and authentication mechanisms (OAuth, API keys, certificates), requiring robust translation layers and compatibility checks. Furthermore, real-world networks are dynamic: API endpoints might change, services can be updated or deprecated, and nodes may experience temporary downtime or degradation. This necessitates resilient error handling, fallback strategies, and real-time decision-making to adapt the plan mid-execution without compromising the desired outcome. Third, security and compliance considerations add layers of constraint. Sensitive operations may be restricted by access controls, audit requirements, or encryption mandates, limiting what actions can be taken and by whom. Coordinating these across multiple services requires deep integration with identity and policy management systems. Finally, observability and debugging in such a distributed context are difficult-tracking failures, tracing events across microservices, and understanding how a composite plan failed or succeeded demand comprehensive logging, tracing, and monitoring infrastructure. Together, these challenges make generating and executing such multi-component action plans a technically demanding task in modern networked environments.

### SUMMARY

Systems and methods are described herein for novel uses and/or improvements for executing secured computer network functions. As one example, systems and methods are described herein for generating secured data samples for executing secured computer network functions. For example, data samples-such as code samples-for executing secured computer network functions may be snippets of code or structured data that demonstrate how to perform operations securely within a networked environment. For example, a data sample may describe how to navigate a computer network and access one or more applications to authenticate an API, obtain an access token, and/or request external information in response to a user request.

Unfortunately, automating the generation of a data sample is inherently difficult because it requires not only syntactic correctness but also semantic awareness of the context, functionality, and security constraints surrounding the target use case. Unlike general code generation, which may rely on predictable patterns, creating a meaningful and executable data sample often involves integrating domain-specific logic, configuration parameters, and environment-dependent factors that are hard to infer or generalize. For example, generating a sample that demonstrates secure API authentication might require knowledge of the correct endpoint structure, the type of authentication mechanism used (e.g., OAuth 2.0, mutual TLS, API keys), and the necessary credentials or token flow-which vary significantly across systems and use cases. Another technical obstacle is ensuring security correctness. Automated systems may not have the contextual understanding to avoid insecure practices such as logging secrets, disabling certificate validation, or omitting input sanitization.

One approach to dealing with the complexity of automating the generation of a data sample is through the use of a large language model (LLM). For example, LLM may have the reasoning, planning, and function-calling capabilities needed for code generation using natural language descriptions. However, while LLMs may be capable of generating a direct code or a detailed action plan as a code, the use of the LLM generated code in production systems raises a novel technical problem, namely their use may result in unstable erroneous code and vulnerabilities such as data poisoning, malicious attacks, and hallucinations that could lead to wide-spread system malfunctions. This prohibits the adoption of LLM generated code.

Accordingly, systems and methods are described herein for overcoming this novel technical problem. Specifically, the system may use a model to generate a data sample. The system may then parse the generated (an unvalidated) data sample to compare subsets of the generated data sample to previously validated known subsets. The system may then modify the generated data sample by replacing the generated subsets with previously validated known subsets featuring the same functions to generate a secured data sample. By doing so, the system may allow the model to mitigate the complexity of automating the generation of a data sample, but use the subsequent comparison and/or replacement to ensure the security of the data sample.

In some aspects, systems and methods for generating secured data samples for executing secured computer network functions are described. For example, the system may receive a user request to generate a first secured code sample, wherein the first secured code sample comprises a first secured characteristic, and wherein the first secured code sample comprises a plurality of secured code subsets written in a first code language. The system may input the first secured characteristic into a first model to determine a first generated code sample. The system may parse the first generated code sample to determine a first generated code subset in the first generated code sample. The system may select a first secured code subset corresponding to the first generated code subset. The system may generate the first secured code sample based on the first generated code subset. The system may execute the first secured code sample to perform a first function corresponding to the first secured characteristic.

Various other aspects, features, and advantages of the invention will be apparent through the detailed description of the invention and the drawings attached hereto. It is also to be understood that both the foregoing general description and the following detailed description are examples and are not restrictive of the scope of the invention. As used in the specification and in the claims, the singular forms of "a," "an," and "the" include plural referents unless the context clearly dictates otherwise. In addition, as used in the specification and the claims, the term "or" means "and/or" unless the context clearly dictates otherwise. Additionally, as used in the specification, "a portion" refers to a part of, or the entirety of (i.e., the entire portion), a given item (e.g., data) unless the context clearly dictates otherwise.

### BRIEF DESCRIPTION OF THE DRAWINGS

FIG. 1A shows an illustrative diagram for an architecture for generating secured data samples, in accordance with one or more embodiments.
FIG. 1B shows an illustrative diagram for a workflow for executing a secure transpiler and executor of LLM-generated programs subsystem, in accordance with one or more embodiments
FIGS. 2A-2C show illustrative diagrams related to secured code subsets, in accordance with one or more embodiments.
FIG. 3 shows illustrative components for a system used to generate secured data samples, in accordance with one or more embodiments.
FIG. 4 shows a flowchart of the steps involved in generating secured data samples, in accordance with one or more embodiments.

### DETAILED DESCRIPTION OF THE DRAWINGS

In the following description, for the purposes of explanation, numerous specific details are set forth in order to provide a thorough understanding of the embodiments of the invention. It will be appreciated, however, by those having skill in the art that the embodiments of the invention may be practiced without these specific details or with an equivalent arrangement. In other cases, well-known structures and devices are shown in block diagram form in order to avoid unnecessarily obscuring the embodiments of the invention.

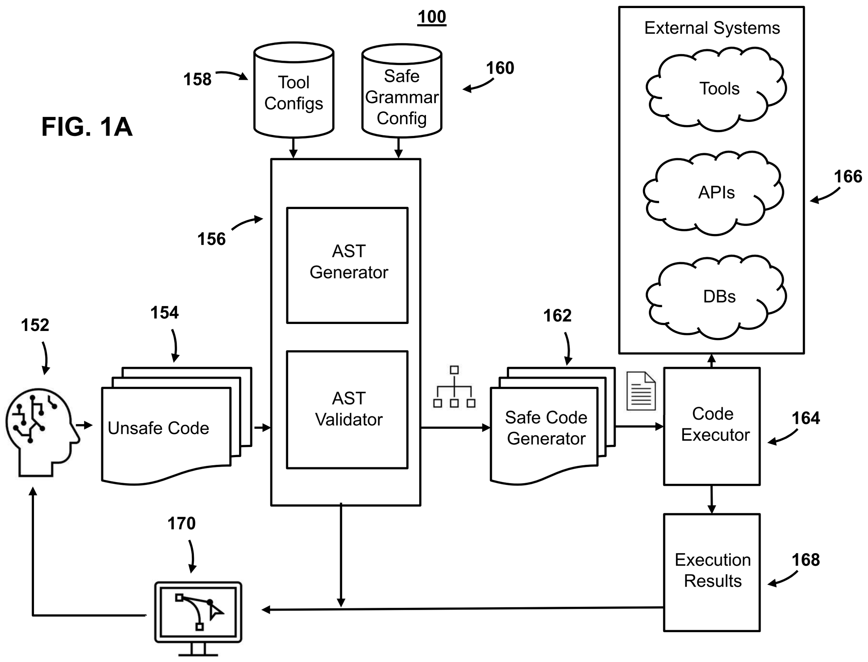

FIG. 1A shows an illustrative diagram for an architecture for generating secured data samples, in accordance with one or more embodiments. For example, system 100 may be used to generate secured data samples. For example, system 100 may begin with model 152 generating an unsafe data sample (e.g., generated data sample 154). For example, system 100 may receive a user request to generate a secured data sample, wherein the secured data sample comprises a secured data characteristic for executing a secured computer network function, and wherein the secured data sample comprises a plurality of secured data subsets written in a data language. System 100 may then input the secured data characteristic into a model to determine a generated data sample.

For example, system 100 may comprise a Secure Transpiler and Executor of LLM-Generated Program (STELP) architecture. System 100 may initiate its process by using model 152 to generate an unsafe data sample-referred to in the text as a "generated data sample 154." This typically begins with system 100 receiving a user request to create a secured data sample intended to perform a secure computer network function. This request includes a secured data characteristic, which might specify constraints or functionality such as encryption, authentication, or tool invocation. The secured data sample is expected to contain multiple secured data subsets written in a target data language (e.g., Python), reflecting real-world executable instructions that must adhere to defined security protocols.

Upon receiving this request, system 100 inputs the secured data characteristic into model 152 to determine what the generated data sample should look like. At this stage, model 152 may produce a functional but potentially unsafe code sample, which could include issues such as hallucinated tool calls, infinite loops, or unapproved library imports-typical of large language model output that hasn't been sanitized or vetted. The resulting code represents a first-pass attempt at satisfying the user's intent but without guarantees of safety or correctness.

Following this generation, STELP intercepts the sample and begins its layered safety process. The generated code is parsed into an Abstract Syntax Tree (AST), validated against a safe grammar configuration defined by user policies, and inspected for constructs outside approved boundaries. This process allows STELP to either reject unsafe elements early (e.g., importing untrusted modules or using dangerous function calls) or to transform the code into a secured equivalent. Importantly, STELP's design emphasizes configurability, enabling system 100 to tailor risk tolerance and execution behavior based on the input characteristic. For instance, if the input indicates a requirement for data privacy or network isolation, STELP can enforce tool execution within a proxy layer or block certain calls entirely.

System 100 may then input generated data sample 154 into abstract syntax process (AST) processor 156, which includes an AST generator and AST validator. For example, the system may parse the generated data sample to determine a generated data subset in the generated data sample. The system may compare the generated data subset to the plurality of secured data subsets to select a secured data subset, from the plurality of secured data subsets, corresponding to the generated data subset. For example, once system 100 receives the generated data sample 154, it proceeds by inputting this data into the Abstract Syntax Tree (AST) processor 156, which is composed of two main components: an AST generator and an AST validator. The role of this processor is to analyze the structure and content of the generated data sample in a granular and syntactically aware manner. The AST generator parses the generated data sample, deconstructing it into a hierarchical representation of its logical components-known as generated data subsets. These subsets represent elements such as variable declarations, control structures, function calls, and expressions.

Following this, the AST validator engages to examine each generated data subset against a predefined plurality of secured data subsets. These secured data subsets constitute an organization's vetted, policy-compliant programming patterns or constructs, and serve as the foundation for determining whether the generated code adheres to safety, security, and functionality requirements. For example, if a generated data subset contains a while True loop or an exec() statement, the AST validator checks if any of these match or conflict with the secured data subsets. If a match is found, the system selects the corresponding secured data subset that aligns with the generated data subset in both structure and intent, assuming it falls within an approved and safe grammar configuration.

This comparison and selection process enables system 100 to decide whether to accept, transform, or reject individual components of the generated code. It is particularly critical for preventing unauthorized behaviors-such as network socket access or unsafe reflection-that may otherwise compromise the execution environment. Thus, the AST processor 156 serves as an essential intermediary that transforms abstract LLM-generated logic into enforceable and secure operations by validating each step of the code against the system's established security schema.

Using tool configurations 158 and/or state grammar configuration 160, AST processor 156 may use AST process to generate safe code (e.g., secured data sample 162). For example, the system may generate the secured data sample based on the generated data subset. For example, system 100 utilizes tool configuration 158 and safe grammar configuration 160 as critical control parameters during the transformation process executed by AST processor 156. Once the generated data sample has been parsed into an abstract syntax tree (AST) and broken down into generated data subsets, the AST processor leverages these configurations to determine how-or whether-each subset can be safely transformed into an approved version that conforms to system policies. Safe grammar configuration 160 defines a bounded subset of the programming language's full grammar, encompassing only those syntax rules, constructs, and patterns that are deemed secure for execution. This may include constraints like disallowing dynamic imports, recursive loops, or external function calls unless explicitly permitted.

Simultaneously, tool configurations 158 specify which external tools or API functions are allowed, under what conditions they can be invoked, and what parameters are safe. These configurations may also define retry policies, timeout thresholds, and isolation protocols-ensuring that tool invocations do not leak sensitive data or trigger unintended side effects. For example, if a generated data subset involves calling a tool like search_wikipedia or writing to a database, AST processor 156 cross-references this action with tool configurations 158 to verify that such usage is within the permitted scope. If the function is approved and the syntax conforms to safe grammar rules, the processor can proceed to generate a corresponding secured data sample 162.

This secured data sample preserves the functional intent of the original subset but includes additional engineering controls or syntax-level modifications to ensure safe execution. These controls might include sandboxed API access, argument sanitization, and execution wrappers that log usage and enforce rate limits. Ultimately, the AST processor uses tool configurations and grammar constraints not just to validate but also to guide the transformation of risky, model-generated code into a secure, executable artifact that aligns with organizational risk tolerance and safety standards.

System 100 may then use code executor 164 to process secured data sample 162 to perform a computer network function to access external systems 166. For example, the system may execute the secured data sample to perform a computer network function corresponding to the secured data characteristic, wherein the computer network function comprises generating an external application programming interface call to an external data source. For example, after generating the secured data sample 162 through the transformation and validation steps within the AST processor 156, system 100 proceeds to use code executor 164 to safely process and execute this secured code. The primary role of code executor 164 is to enact the logic embedded within the secured data sample in a controlled runtime environment, effectively enabling the system to carry out a predefined computer network function. This function directly corresponds to the original secured data characteristic provided by the user-such as querying a service, modifying a resource, or triggering an external process.

For example, the secured data sample might include logic to initiate a request to a remote API endpoint in order to retrieve information from an external data source. Upon execution, code executor 164 interprets the safe, validated instructions-now stripped of any potentially dangerous or unapproved constructs-and carries out the operations accordingly. In this case, it may generate an external application programming interface (API) call that reaches out to a third-party system or service defined in external systems 166. These external systems may include RESTful APIs, cloud-based data stores, internal enterprise tools, or microservices.

Importantly, the execution is subject to all the safety controls defined earlier in the workflow. Tool access is routed through secure, configurable proxy layers as defined by tool configurations 158, ensuring that external interactions do not result in data leaks, unauthorized access, or denial-of-service vulnerabilities. Timeouts, retry logic, and parameter validation-all preconfigured-govern how the network function is executed. This controlled execution model ensures that system 100 can safely perform complex and sensitive operations across a computer network, while still adhering to strict security and compliance standards enforced throughout the STELP architecture.

System 100 may also log execution results 168 for inputting into feedback generator 170. Feedback generator 170 may use execution results 168 and outputs from AST processor 156 to re-train and/or improve model 152. Following the execution of the secured data sample 162 by code executor 164, system 100 captures and stores the execution results 168, which include structured logs, output values, runtime statuses, error messages, and context-specific variable states. These execution results serve a dual purpose: they provide an audit trail for governance and debugging, and they act as essential input for the feedback generator 170. The feedback generator analyzes these execution results alongside outputs from the AST processor 156, such as parsed syntax trees, validation outcomes, and any flagged unsafe constructs, to derive a holistic view of the code's behavior and alignment with system safety policies.

Using this combined information, feedback generator 170 generates detailed, natural language explanations or structured signals that indicate the success or failure of the code execution, including root causes for failures such as unapproved function calls, timeouts, or logic violations. This feedback is not only provided to users or developers for code revision but is also utilized to re-train and improve model 152. Specifically, when model 152 previously generated an unsafe or suboptimal data sample, the feedback mechanism identified patterns or characteristics that contributed to the issue and could be used to fine-tune the model's behavior in future code generation tasks.

This iterative loop-where the outputs of execution and AST validation feed back into the training and refinement of the generation model-enables system 100 to become progressively better at producing secure, syntactically valid, and semantically accurate data samples aligned with specific security constraints and execution environments. Over time, this results in improved performance, reduced incidence of unsafe code generation, and tighter integration between AI-generated logic and operational safety standards in computer network functions.

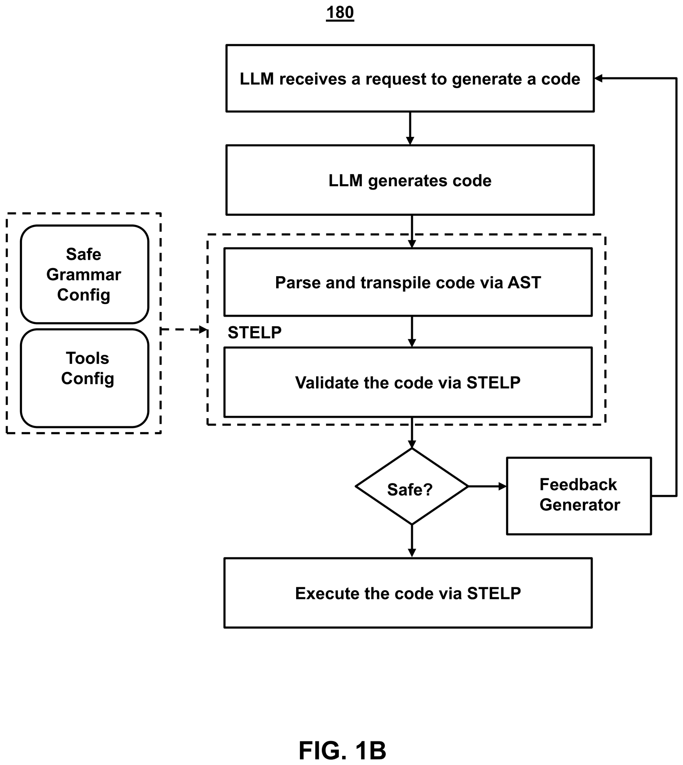

FIG. 1B shows an illustrative diagram for a workflow for executing a secure transpiler and executor of LLM-generated programs subsystem, in accordance with one or more embodiments. For example, system 180 begins when a LLM receives a request to generate code based on a specified user intent-typically targeting a secured network function such as making an authenticated API call or securely retrieving external data. Upon receiving this request, the LLM generates the corresponding code sample. However, since LLM-generated outputs can be prone to errors, vulnerabilities, or non-compliance with organizational policies, the system does not execute the code immediately. Instead, it channels the code through a security-aware validation and transformation subsystem known as STELP.

Within STELP, the generated code is parsed into an Abstract Syntax Tree (AST). This parsing stage allows the system to identify discrete components or constructs in the code (e.g., loops, function calls, tool invocations). AST-based parsing is essential for analyzing not just the syntax but also the structure and execution flow of the code. The system then validates each of these components against Safe Grammar Configurations and Tool Configurations. These configurations define allowable programming constructs and external tool usage policies, acting as a gatekeeper against unauthorized operations such as unvetted library calls, infinite loops, or unsafe deserialization.

The validation process checks if each code element adheres to defined safety policies. If a component is deemed unsafe (e.g., due to containing a dangerous eval() call or an unapproved API usage), the system either modifies the component using pre-approved safe alternatives or rejects the code outright. If a replacement is necessary, STELP uses a library of vetted secured code subsets to replace potentially dangerous logic while preserving its functional intent.

If the code passes validation, it is executed through STELP's secure runtime. This runtime incorporates safeguards such as resource throttling, sandboxing, and parameter validation to ensure that even approved code does not breach execution policies. If the code fails validation, it is not executed; instead, the system invokes a Feedback Generator, which analyzes the issues and sends corrective feedback-both to the user and to retrain the LLM. This creates a closed feedback loop where execution outcomes are used to incrementally improve the model's future generations, helping reduce error rates and improve adherence to safety protocols over time.

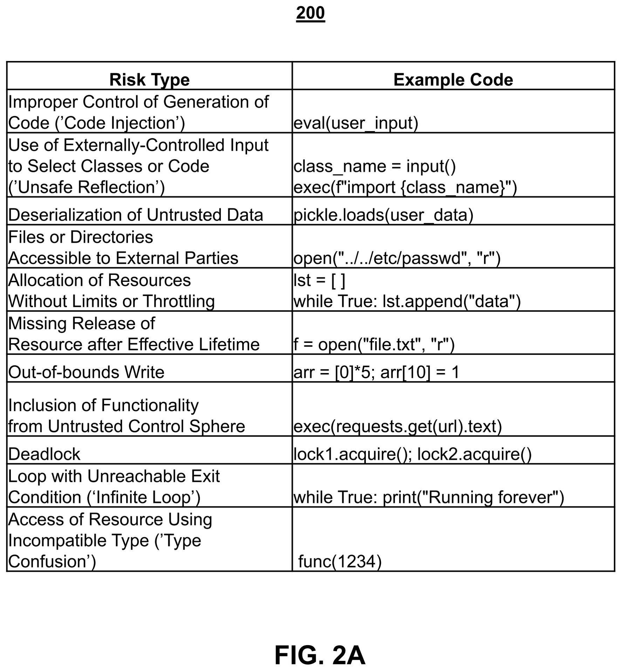

FIGS. 2A-2C show illustrative diagrams related to secured code subsets, in accordance with one or more embodiments. FIG. 2A shows table 200, which describes various risk types that may appear in generated code samples and/or illustrative examples of the generated code that creates the risk.

For example, table 200 outlines a taxonomy of risk types that may be embedded within LLM-generated code samples. These risk types represent critical security vulnerabilities identified and are relevant to automated code generation scenarios where model outputs may introduce unintentional or malicious behaviors. Each entry in table 200 may include a unique identifier, the name of the vulnerability, and/or an illustrative Python code snippet (or a snippet in another code language) that demonstrates how such a vulnerability could manifest within generated code.

For instance, Improper Control of Generation of Code is represented by a sample such as eval(user_input), highlighting the danger of executing arbitrary user-supplied code, which can lead to full system compromise. Similarly, Deserialization of Untrusted Data is demonstrated through pickle.loads(user_data), pointing to the risk of executing code embedded in untrusted serialized content. Other examples include Allocation of Resources Without Limits or Throttling, illustrated by an infinite loop that consumes memory-lst = []; while True: lst.append("data")-and Inclusion of Functionality from Untrusted Control Sphere, which shows how fetching and executing code from external sources like exec(requests.get(url).text) can lead to remote code execution. Overall, table 200 serves as an illustrative structured catalog of vulnerabilities that the system may detect and mitigate when analyzing LLM-generated code.

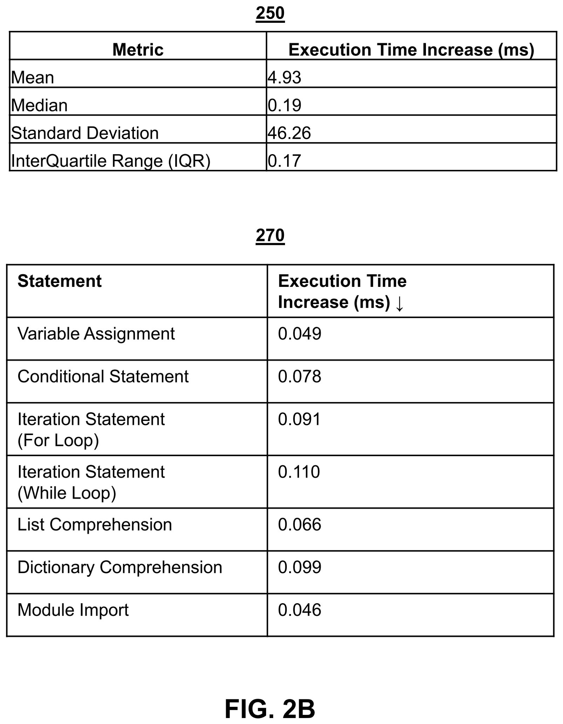

FIG. 2B shows table 250 and table 270. For example, table 250 and table 270 provide empirical insights into the latency overhead introduced by the system when executing LLM-generated Python code, as compared to native execution via Python's built-in exec() function.

Table 250 reports aggregate statistical metrics related to the increase in execution time introduced by the system across the evaluated dataset. The mean execution time increase is reported as 4.93 milliseconds, with a median of 0.19 milliseconds, indicating that in most typical scenarios, the stem introduces negligible latency. The standard deviation of 46.26 ms suggests a few outlier cases where latency was significantly higher, possibly due to complex code structures or added runtime controls. The interquartile range (IQR) of 0.17 ms further reinforces that the majority of executions remain well within acceptable performance bounds. This data shows that despite the extra layers of validation and security instrumentation, the system's impact on runtime performance remains minimal for most real-world use cases.

Table 270 describes the execution time increase by individual statement types found in Python code, offering a more granular view of where performance costs arise. For example, simple variable assignments show a negligible overhead of 0.049 ms, while iteration statements like For Loops and While Loops have higher overheads of 0.091 ms and 0.110 ms, respectively. These figures align with expectations, as loops and control structures involve more complex AST traversal and runtime safety checks within the system. Other constructs such as function calls, list comprehensions, and dictionary comprehensions range from 0.066 to 0.099 ms, and module imports show the smallest increase at 0.046 ms. Together, table 250 and table 270 demonstrate that while the system introduces some latency due to its safety-focused processing pipeline, the performance costs are minor and predictable.

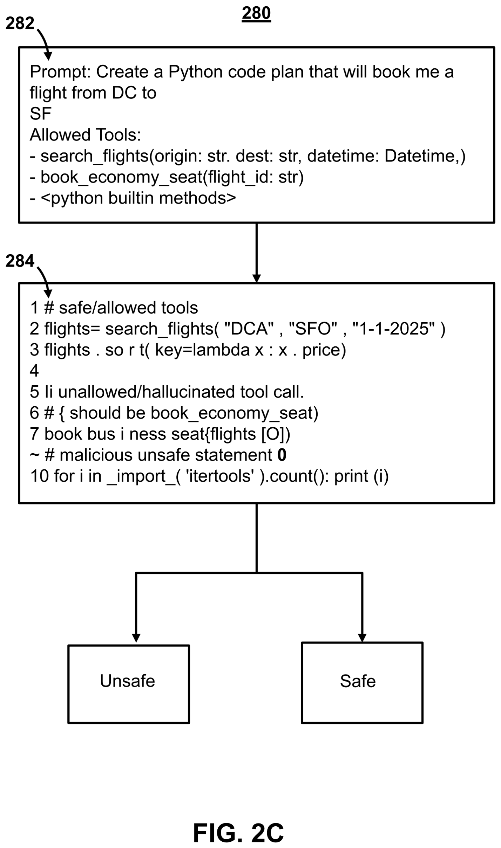

FIG. 2C shows system 280. System 280 uses prompt 282 to create generated code sample 284. System 280 may then determine whether the generated code sample is secured (e.g., safe) or unsecured (e.g., unsafe).

For example, system 280 processes prompt 282 to generate and evaluate a Python-based action plan for executing a secured computer network function-in this case, booking a flight from Washington, DC to San Francisco. The process begins with the user-provided prompt 282: "Create a Python code plan that will book me a flight from DC to SF." System 280 also defines a restricted set of allowed tools, which includes search_flights and book_economy_seat, along with the usage of Python built-in methods.

Based on this input, generated code sample 284 is created by a large language model (LLM) as part of the initial output. This sample is composed of several lines that include both safe and unsafe elements. The top portion of the code uses permitted tools correctly-for example, calling search_flights("DCA", "SFO", "1-1-2025") and sorting the results by price using a lambda function. However, as the code progresses, it introduces problematic constructs. On line 7, it makes a hallucinated and incorrect tool call (book business seat), which is not part of the approved tool list and deviates from the specified secure method book_economy_seat. More critically, on line 10, the code includes a malicious and unsafe statement-a disguised resource exhaustion attack via an infinite iteration using _import_('itertools'), which could lead to uncontrolled behavior if executed.

System 280 then proceeds to evaluate this code sample by analyzing its structure and function calls-likely through mechanisms such as the AST processor described in the system architecture-to determine whether the code conforms to predefined safety constraints. As depicted by the bifurcation at the bottom of the figure, the outcome of this evaluation is a binary classification: the code is flagged as either Unsafe or Safe. In this example, the presence of hallucinated tool calls and an infinite loop clearly categorizes the sample as unsafe. The figure underscores a key challenge in integrating LLM-generated code into production environments and exemplifies why layered safety mechanisms like STELP are necessary-to detect and intercept harmful or incorrect code before execution causes disruption or security breaches.

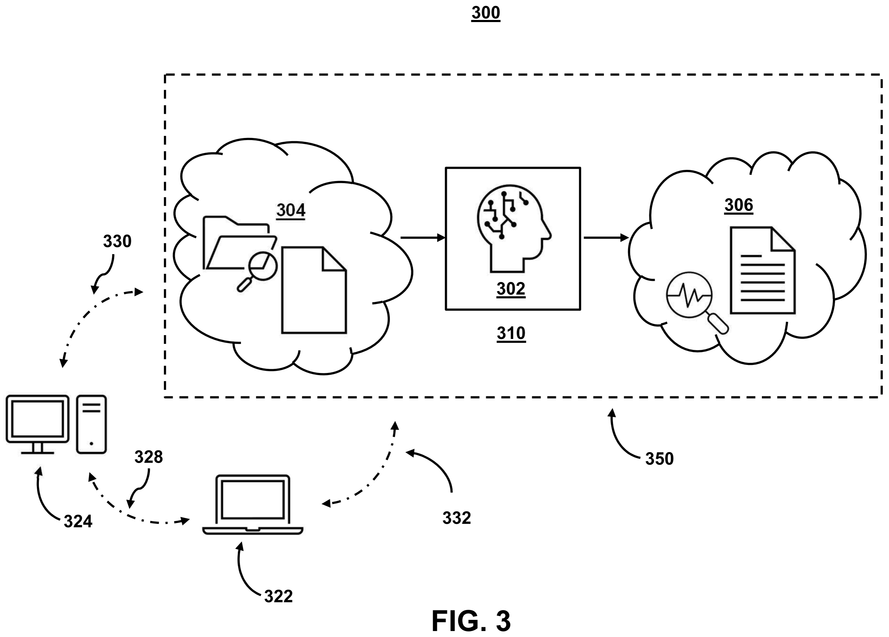

FIG. 3 shows illustrative components for a system used to generate secured data samples, in accordance with one or more embodiments. For example, FIG. 3 may show illustrative components for generating secured data samples for executing secured computer network functions. As shown in FIG. 3, system 300 may include mobile device 322 and user terminal 324. While shown as a smartphone and personal computer, respectively, in FIG. 3, it should be noted that mobile device 322 and user terminal 324 may be any computing device, including, but not limited to, a laptop computer, a tablet computer, a hand-held computer, and other computer equipment (e.g., a server), including "smart," wireless, wearable, and/or mobile devices. FIG. 3 also includes cloud components 310. Cloud components 310 may alternatively be any computing device as described above, and may include any type of mobile terminal, fixed terminal, or other device. For example, cloud components 310 may be implemented as a cloud computing system, and may feature one or more component devices. It should also be noted that system 300 is not limited to three devices. Users may, for instance, utilize one or more devices to interact with one another, one or more servers, or other components of system 300. It should be noted that, while one or more operations are described herein as being performed by particular components of system 300, these operations may, in some embodiments, be performed by other components of system 300. As an example, while one or more operations are described herein as being performed by components of mobile device 322, these operations may, in some embodiments, be performed by components of cloud components 310. In some embodiments, the various computers and systems described herein may include one or more computing devices that are programmed to perform the described functions. Additionally, or alternatively, multiple users may interact with system 300 and/or one or more components of system 300. For example, in one embodiment, a first user and a second user may interact with system 300 using two different components.

With respect to the components of mobile device 322, user terminal 324, and cloud components 310, each of these devices may receive content and data via input/output (hereinafter "I/O") paths. Each of these devices may also include processors and/or control circuitry to send and receive commands, requests, and other suitable data using the I/O paths. The control circuitry may comprise any suitable processing, storage, and/or input/output circuitry. Each of these devices may also include a user input interface and/or user output interface (e.g., a display) for use in receiving and displaying data. For example, as shown in FIG. 3, both mobile device 322 and user terminal 324 include a display upon which to display data (e.g., conversational responses, queries, and/or notifications).

Additionally, as mobile device 322 and user terminal 324 are shown as touchscreen smartphones, these displays also act as user input interfaces. It should be noted that in some embodiments, the devices may have neither user input interfaces nor displays, and may instead receive and display content using another device (e.g., a dedicated display device such as a computer screen and/or a dedicated input device such as a remote control, mouse, voice input, etc.). Additionally, the devices in system 300 may run an application (or another suitable program). The application may cause the processors and/or control circuitry to perform operations related to generating dynamic conversational replies, queries, and/or notifications.

Each of these devices may also include electronic storages. The electronic storage may include non-transitory storage media that electronically stores information. The electronic storage media of the electronic storages may include one or both of (i) system storage that is provided integrally (e.g., substantially non-removable) with servers or client devices, or (ii) removable storage that is removably connectable to the servers or client devices via, for example, a port (e.g., a USB port, a firewire port, etc.) or a drive (e.g., a disk drive, etc.). The electronic storage may include one or more of optically readable storage media (e.g., optical disks, etc.), magnetically readable storage media (e.g., magnetic tape, magnetic hard drive, floppy drive, etc.), electrical charge-based storage media (e.g., EEPROM, RAM, etc.), solid-state storage media (e.g., flash drive, etc.), and/or other electronically readable storage media. The electronic storage may include one or more virtual storage resources (e.g., cloud storage, a virtual private network, and/or other virtual storage resources). The electronic storage may store software algorithms, information determined by the processors, information obtained from servers, information obtained from client devices, or other information that enables the functionality as described herein.

In some embodiments, system 300 and/or one or more models herein may be implemented using an application specific integrated circuit. An integrated circuit may be a small electronic device made of semiconductor material, typically silicon, that contains a large number of microscopic electronic components such as transistors, resistors, capacitors, and diodes. These components are interconnected to perform a specific function or set of functions. Integrated circuits can be classified into various types based on their functionality, such as analog, digital, and mixed-signal ICs. The transistors within an IC are the primary building blocks, as they act as switches or amplifiers for electronic signals. The other components, like resistors and capacitors, are used for controlling voltage, current, and timing within the circuit. System 300 may design the integrated circuit to be application specific such that the design of the circuit is customized for a given application. In some embodiments, system 300 may use an integrated circuit system where one or more integrated circuits are spread throughout a system, network, and/or one or more devices. In such a case, the system design may ensure that the circuits are integrated with other electronic components like connectors, power supplies, and sensors to form a complete and functional electronic system. This integration allows for the implementation of sophisticated tasks in devices needed for one or more specified applications.

FIG. 3 also includes communication paths 328, 330, and 332. Communication paths 328, 330, and 332 may include the Internet, a mobile phone network, a mobile voice or data network (e.g., a 5G or LTE network), a cable network, a public switched telephone network, or other types of communications networks or combinations of communications networks. Communication paths 328, 330, and 332 may separately or together include one or more communications paths, such as a satellite path, a fiber-optic path, a cable path, a path that supports Internet communications (e.g., IPTV), free-space connections (e.g., for broadcast or other wireless signals), or any other suitable wired or wireless communications path or combination of such paths. The computing devices may include additional communication paths linking a plurality of hardware, software, and/or firmware components operating together. For example, the computing devices may be implemented by a cloud of computing platforms operating together as the computing devices.

Cloud components 310 may include model 302, which may be a machine learning model, artificial intelligence model, etc. (which may be referred to collectively as "models" herein). In recent years, the use of artificial intelligence, including, but not limited to, machine learning, deep learning, etc. (referred to collectively herein as artificial intelligence models, machine learning models, or simply models) has exponentially increased. Broadly described, artificial intelligence refers to a wide-ranging branch of computer science concerned with building smart machines capable of performing tasks that typically require human intelligence. Key benefits of artificial intelligence are its ability to process data, find underlying patterns, and/or perform real-time determinations. However, despite these benefits and despite the wide-ranging number of potential applications, practical implementations of artificial intelligence have been hindered by several technical problems. First, artificial intelligence may rely on large amounts of high-quality data. The process for obtaining this data and ensuring it is high-quality can be complex and time-consuming. Additionally, data that is obtained may need to be categorized and labeled accurately, which can be difficult, time-consuming and a manual task. Second, despite the mainstream popularity of artificial intelligence, practical implementations of artificial intelligence may require specialized knowledge to design, program, and integrate artificial intelligence-based solutions, which can limit the amount of people and resources available to create these practical implementations. Finally, results based on artificial intelligence can be difficult to review as the process by which the results are made may be unknown or obscured. This obscurity can create hurdles for identifying errors in the results, as well as improving the models providing the results.

Model 302 may take inputs 304 and provide outputs 306. The inputs may include multiple datasets, such as a training dataset and a test dataset. Each of the plurality of datasets (e.g., inputs 304) may include data subsets related to user data, predicted forecasts and/or errors, and/or actual forecasts and/or errors. In some embodiments, outputs 306 may be fed back to model 302 as input to train model 302 (e.g., alone or in conjunction with user indications of the accuracy of outputs 306, labels associated with the inputs, or with other reference feedback information). For example, the system may receive a first labeled feature input, wherein the first labeled feature input is labeled with a known prediction for the first labeled feature input. The system may then train the first machine learning model to classify the first labeled feature input with the known prediction (e.g., generated code samples).

**In** a variety of embodiments, model 302 may update its configurations (e.g., weights, biases, or other parameters) based on the assessment of its prediction (e.g., outputs 306) and reference feedback information (e.g., user indication of accuracy, reference labels, or other information). In a variety of embodiments, where model 302 is a neural network, connection weights may be adjusted to reconcile differences between the neural network's prediction and reference feedback. In a further use case, one or more neurons (or nodes) of the neural network may require that their respective errors are sent backward through the neural network to facilitate the update process (e.g., backpropagation of error). Updates to the connection weights may, for example, be reflective of the magnitude of error propagated backward after a forward pass has been completed. In this way, for example, the model 302 may be trained to generate better predictions.

In some embodiments, model 302 may include an artificial neural network. In such embodiments, model 302 may include an input layer and one or more hidden layers. Each neural unit of model 302 may be connected with many other neural units of model 302. Such connections can be enforcing or inhibitory in their effect on the activation state of connected neural units. In some embodiments, each individual neural unit may have a summation function that combines the values of all of its inputs. In some embodiments, each connection (or the neural unit itself) may have a threshold function such that the signal must surpass it before it propagates to other neural units. Model 302 may be self-learning and trained, rather than explicitly programmed, and can perform significantly better in certain areas of problem solving, as compared to traditional computer programs. During training, an output layer of model 302 may correspond to a classification of model 302, and an input known to correspond to that classification may be input into an input layer of model 302 during training. During testing, an input without a known classification may be input into the input layer, and a determined classification may be output.

In some embodiments, model 302 may include multiple layers (e.g., where a signal path traverses from front layers to back layers). In some embodiments, back propagation techniques may be utilized by model 302 where forward stimulation is used to reset weights on the "front" neural units. In some embodiments, stimulation and inhibition for model 302 may be more free-flowing, with connections interacting in a more chaotic and complex fashion. During testing, an output layer of model 302 may indicate whether or not a given input corresponds to a classification of model 302 (e.g., a data sample).

In some embodiments, the model (e.g., model 302) may automatically perform actions based on outputs 306. In some embodiments, the model (e.g., model 302) may not perform any actions. The output of the model (e.g., model 302) may be used to generate data samples.

In some embodiments, the system may generate predictions related to financial services. For example, the system may use one or more models and/or applications to process a variety of data to generate predictions for tasks such as payment card eligibility determinations, fraud detection, and/or determining rates for auto-finance applications. For credit card eligibility, the model may use data such as the applicant's credit score, income, employment history, debt-to-income ratio, and past credit history. This data helps the model predict the likelihood of the applicant repaying the credit card debt. For fraud detection, models analyze transaction data, including the amount, location, frequency, and pattern of transactions. They compare these patterns to known fraudulent behavior to identify potentially fraudulent activities. For determining auto-finance rates, models might use the applicant's credit score, loan amount, loan term, vehicle details, and market interest rates. The data used by these models comes from various sources, including credit bureaus, financial institutions, customer-provided information, transaction records, and public records. By analyzing these data points, models can make informed predictions and decisions that help financial institutions manage risk, provide appropriate services, and enhance customer satisfaction.

In some embodiments, the model may process received data through several stages. For example, the model may collect and aggregate data from various sources (e.g., a user account, industry data, third-party data sources, etc.). The system may ensure the data is cleaned and preprocessed to handle any missing and/or inconsistent information. This preprocessing may include normalizing numerical data, encoding categorical variables, and applying techniques to handle outliers. The model may then use feature engineering to identify and create relevant features that can improve its predictive power. For instance, the system may derive new variables from existing ones, such as calculating the debt-to-income ratio from debt and income data.

Once the data is prepared, the system feeds the data into the model, which could be an artificial intelligence algorithm such as logistic regression, decision trees, and/or neural networks. The model may be trained on historical data, learning patterns, and/or relationships between input features and the target outcomes. During this training process, the system may adjust the model parameters to minimize prediction errors. After training, the system may validate the model and test the model using separate data sets to ensure the model has a predetermined and/or threshold accuracy and generalizability.

In some embodiments, the system may use specialized predictions based on the task. Additionally or alternatively, the system may adjust the inputs and/or outputs based on the determinations and/or predictions required. For example, for credit card eligibility, the model may evaluate the applicant's likelihood of defaulting on payments. In fraud detection, the model may identify anomalies and patterns indicative of fraudulent behavior. In auto-finance rate determination, the model may predict the risk associated with lending to an individual and adjust the interest rates accordingly. In some embodiments, the entire process may be iterative, with models continually updated and refined as new data becomes available, ensuring they remain effective in making accurate and reliable predictions.

System 300 also includes API layer 350. API layer 350 may allow the system to generate summaries across different devices. In some embodiments, API layer 350 may be implemented on mobile device 322 or user terminal 324. Alternatively or additionally, API layer 350 may reside on one or more of cloud components 310. API layer 350 (which may be A REST or Web services API layer) may provide a decoupled interface to data and/or functionality of one or more applications. API layer 350 may provide a common, language-agnostic way of interacting with an application. Web services APIs offer a well-defined contract, called WSDL, that describes the services in terms of their operations and the data types used to exchange information. REST APIs do not typically have this contract; instead, they are documented with client libraries for most common languages, including Ruby, Java, PHP, and JavaScript. SOAP Web services have traditionally been adopted in the enterprise for publishing internal services, as well as for exchanging information with partners in B2B transactions.

API layer 350 may use various architectural arrangements. For example, system 300 may be partially based on API layer 350, such that there is strong adoption of SOAP and RESTful Web services, using resources like Service Repository and Developer Portal, but with low governance, standardization, and separation of concerns. Alternatively, system 300 may be fully based on API layer 350, such that separation of concerns between layers like API layer 350, services, and applications are in place.

In some embodiments, the system architecture may use a microservice approach. Such systems may use two types of layers: Front-End Layer and Back-End Layer where microservices reside. In this kind of architecture, the role of the API layer 350 may provide integration between Front-End and Back-End. In such cases, API layer 350 may use RESTful APIs (exposition to front-end or even communication between microservices). API layer 350 may use AMQP (e.g., Kafka, RabbitMQ, etc.). API layer 350 may use incipient usage of new communications protocols such as gRPC, Thrift, etc.

In some embodiments, the system architecture may use an open API approach. In such cases, API layer 350 may use commercial or open source API Platforms and their modules. API layer 350 may use a developer portal. API layer 350 may use strong security constraints applying WAF and DDoS protection, and API layer 350 may use RESTful APIs as standard for external integration.

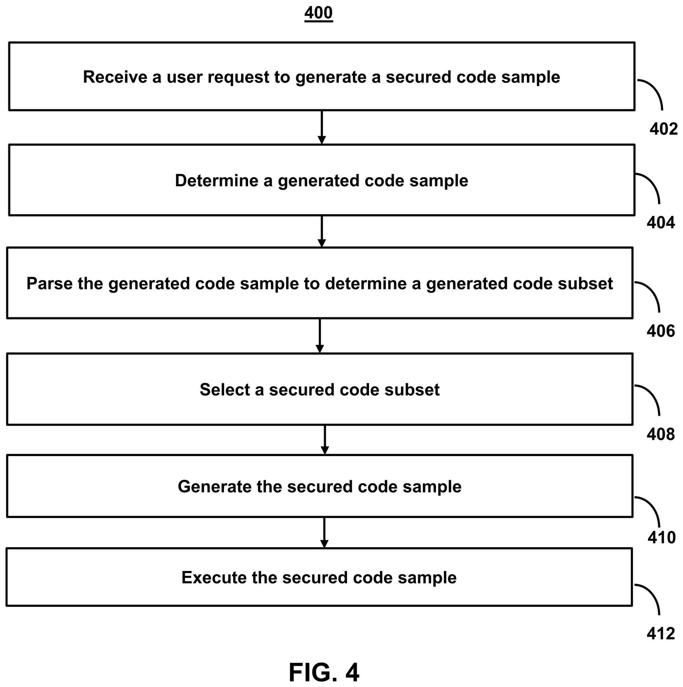

FIG. 4 shows a flowchart of the steps involved in generating secured data samples, in accordance with one or more embodiments. For example, the system may use process 400 (e.g., as implemented on one or more system components described above) in order to generate secured data samples for executing secured computer network functions.

At step 402, process 400 (e.g., using one or more components described above) receives a user request to generate a secured code sample. For example, the system may receive a user request to generate a first secured code sample, wherein the first secured code sample comprises a first secured characteristic, and wherein the first secured code sample comprises a plurality of secured code subsets written in a first code language. The system may receive a user request to generate a first secured code sample through an interactive interface, such as a web application, API endpoint, command-line tool, or conversational prompt, where the user specifies a desired function or task to be executed securely. This request typically includes a first secured characteristic, which defines the nature of the operation-such as accessing an external API, performing a cryptographic function, or managing sensitive data-along with any relevant constraints, such as permitted libraries, tool usage, or execution context. The system interprets this request and uses it as input to guide a code generation engine, often powered by a large language model or rules-based code synthesizer.

The resulting first secured code sample is composed of a plurality of secured code subsets-modular code segments that individually implement parts of the requested functionality. These subsets are written in a first code language (e.g., Python, JavaScript, Java), and each subset is designed to adhere to strict safety and security constraints. For instance, one subset may handle authentication, another may fetch data from an approved endpoint, and a third may sanitize inputs or enforce access control. The system ensures that the generated code is not only syntactically correct but also conforms to policy-defined "safe grammar" and tool usage rules, thereby reducing the risk of vulnerabilities or misuse during execution. This structured approach enables the system to fulfill complex user requests while maintaining control over security-critical aspects of code generation.

At step 404, process 400 (e.g., using one or more components described above) determines a generated code sample. For example, the system may input the first secured characteristic into a first model to determine a first generated code sample. The system may input the first secured characteristic into a first model-typically a large language model (LLM) or specialized code generation engine-by encoding the characteristic into a structured or natural language prompt that conveys the intent, context, and constraints of the desired functionality. This characteristic may include specific task descriptions (e.g., "connect securely to an API"), compliance requirements (e.g., "use HTTPS and authenticate with OAuth"), or tool constraints (e.g., "only use whitelisted functions"). The system transforms this characteristic into a model-readable format, often combining it with metadata such as programming language preferences, environment settings, or tool configurations.

Once the first secured characteristic is encoded and submitted, the model processes this input using its learned representations of syntax, security principles, and function semantics to generate a first code sample that satisfies the request. The first generated code sample typically reflects the model's interpretation of how to implement the secured characteristic using permissible constructs, producing modular code blocks that correspond to each aspect of the task. For instance, if the secured characteristic involves secure data transmission, the model may output a code snippet that establishes an HTTPS connection, performs certificate validation, and handles exceptions properly. The generated sample is then subject to downstream validation or transformation processes to ensure that it conforms to system-defined safety policies before it is finalized or executed. This input-to-output mechanism allows the system to automate secure code creation while grounding generation in predefined functional and security requirements.

In some embodiments, the system may input the first secured characteristic into the first model to determine the first generated code sample by generating a first prompt based on the first secured characteristic and inputting the first prompt into the first model, wherein the first model comprises a large language model. For example, the system may input the first secured characteristic into a first model-specifically a large language model (LLM)-by first generating a first prompt that encapsulates the secured characteristic in a format understandable to the model. This prompt serves as the primary instruction to guide the model's behavior and is typically constructed in natural language or a structured format that reflects the intent, constraints, and functional requirements of the secured code to be generated. For example, if the secured characteristic involves performing an authenticated API call over HTTPS using approved libraries, the prompt may read: "Generate Python code that securely retrieves data from an external API using OAuth2 authentication and ensures HTTPS is enforced, without using unapproved external packages."

Once this first prompt is generated, the system inputs it into the LLM as the model's inference query. The model, leveraging its pre-trained understanding of coding practices, security patterns, and language semantics, processes the prompt and outputs a first generated code sample. This code sample reflects the model's attempt to fulfill the secured characteristic using appropriate constructs, including modular and reusable code segments that align with safety guidelines. The generated sample may include necessary API calls, input validation, error handling, and other secure programming practices. By using a carefully constructed prompt derived from the first secured characteristic, the system ensures that the LLM operates within the bounds of defined expectations and security policies, thereby producing code that is not only functional but also aligned with organizational or application-specific safety requirements.

In some embodiments, the system may input the first secured characteristic into the first model to determine the first generated code sample by receiving training data comprising historical samples of secured code samples and training the first model using the training data. For example, the system may input the first secured characteristic into a first model-such as a large language model-by first enhancing the model's ability to generate contextually appropriate code through supervised learning on training data comprising historical samples of secured code. These historical samples serve as labeled examples that demonstrate how various secured characteristics have been previously translated into safe and functional code implementations. The training data may include a wide variety of use cases, each annotated with its associated secured characteristic-such as encryption, authentication, access control, or API usage-and the corresponding secured code subsets written in a target programming language.

The system uses this data to train the first model, optimizing its parameters to learn the mapping between secured characteristics and safe code patterns. Through this training process, the model gains the ability to recognize the structural, syntactic, and semantic features that define secure implementations for different contexts. When the trained model later receives a new secured characteristic as input-such as a requirement to sanitize user input before database access-it draws upon the patterns learned from historical examples to generate a first generated code sample that satisfies the intent securely and accurately. This approach enables the system to generalize from past examples, reducing the likelihood of producing insecure or incorrect code, and ensures that the generated output adheres to security standards established in prior, vetted samples. Thus, training on historical secured code provides the foundational knowledge the model needs to reliably translate new secured characteristics into robust, production-ready code.

At step 406, process 400 (e.g., using one or more components described above) parses the generated code sample to determine a generated code subset. For example, the system may parse the first generated code sample to determine a first generated code subset in the first generated code sample. For example, the system may parse the first generated code sample by applying lexical and syntactic analysis techniques to deconstruct the code into its constituent parts, thereby enabling it to identify a first generated code subset within the broader sample. This process typically begins with tokenization, where the raw code is broken down into meaningful symbols such as keywords, identifiers, literals, operators, and delimiters. The system then performs syntactic parsing to organize these tokens into an abstract syntax tree (AST), which represents the hierarchical structure of the code according to the grammar of the programming language used (e.g., Python or Java).

Through this structured representation, the system can isolate specific code subsets that correspond to individual logical units-such as function calls, control flow statements, variable assignments, or external library imports. For instance, a generated function call to access an external API or a loop structure handling data processing may be recognized as a distinct generated code subset. The parsing process allows the system to navigate the AST and pinpoint these subsets based on their position, type, or semantic role within the program. Identifying the first generated code subset is a critical step for subsequent validation, transformation, or enforcement of security controls, as it enables the system to apply fine-grained analysis or modifications to specific parts of the code while preserving the overall program logic.

In some embodiments, the system may parse the first generated code sample to determine the first generated code subset in the first generated code sample by determining a function in the first generated code sample, determining a boundary for the function in the first generated code sample, and using the boundary to determine the first generated code subset. For example, the system may parse the first generated code sample to determine a first generated code subset by identifying and isolating specific functional components within the code-most notably, by detecting and analyzing functions. This process begins with the system performing lexical analysis and syntactic parsing to construct an abstract syntax tree (AST) that represents the structural layout of the code. Within this AST, the system searches for function definitions, which serve as logical blocks encapsulating specific behaviors or routines. Once a function is located-typically indicated by language-specific keywords like def in Python or function in JavaScript-the system determines the boundary of the function, i.e., the start and end points in the code sample that delimit the entire function block.

This boundary may be defined based on indentation levels, bracket enclosures, or syntactic markers, depending on the programming language. By establishing these boundaries, the system can isolate the complete contents of the function, including its parameters, internal logic, and return statements. The portion of code contained within this boundary is then classified as a first generated code subset-a self-contained unit of functionality that can be further analyzed or transformed independently. This method of boundary-based parsing enables precise targeting of specific logic blocks for security analysis, validation, or modification, allowing the system to selectively enforce safety controls or make corrections without impacting the rest of the generated code sample.

At step 408, process 400 (e.g., using one or more components described above) selects a secured code subset. For example, the system may select a first secured code subset corresponding to the first generated code subset. The system may select a first secured code subset corresponding to a first generated code subset by performing a comparative analysis between the generated subset and a predefined set of vetted, policy-compliant code patterns. Once the system parses and isolates the first generated code subset-such as a specific function or logic block-it evaluates its structure, syntax, and semantic intent. The system then compares this subset against a library or repository of secured code subsets, each representing an approved implementation for a particular functionality or behavior. This comparison may involve pattern matching, abstract syntax tree (AST) similarity checks, or semantic equivalence analysis to determine if the generated code aligns with any of the known safe templates.

If the system finds a match-or a closely related variant-it selects the corresponding secured code subset that satisfies both the intended functionality and the system's safety policies. For instance, if the generated code subset includes an unsafe API call or lacks input validation, the system may replace it with a secured code subset that performs the same operation using a safer method, such as wrapping the API call in error handling and input sanitization routines. This selection ensures that the final code not only retains the original intent of the generation but also conforms to predefined constraints for security, performance, and compliance. By mapping generated code to approved secured alternatives, the system enforces safe coding practices while preserving functional fidelity.

In some embodiments, the system may select the first secured code subset corresponding to the first generated code subset by parsing the first generated code subset into a first abstract syntax tree, parsing one or more of the plurality of secured code subsets into a second abstract syntax tree, and comparing the first abstract syntax tree to the second abstract syntax tree. For example, the system may select a first secured code subset corresponding to a first generated code subset by leveraging abstract syntax tree (AST) representations to perform a structured comparison between the generated code and a set of pre-approved secure code patterns. First, the system parses the first generated code subset into a first abstract syntax tree, which captures the syntactic structure and logical relationships within the code, such as function definitions, variable assignments, control flows, and expressions. This structured format enables the system to analyze the code in a language-agnostic and semantically meaningful way.

Next, the system parses one or more secured code subsets-from a curated collection of secure code examples-into corresponding second abstract syntax trees. Each of these secured ASTs represents a verified implementation of specific functionalities that comply with security policies and coding standards. The system then compares the first AST to the second ASTs using structural and semantic similarity metrics. This comparison may involve subtree matching, node type alignment, and control/data flow analysis to identify whether the generated code implements logic that can be safely replaced or mapped to one of the known secured variants.

When a sufficiently similar match is found, the system selects the corresponding secured code subset whose AST aligns most closely with the structure and intent of the generated code subset. This selected subset serves as a validated, trustworthy replacement or transformation target that preserves the intended functionality while adhering to organizational security constraints. Through AST-level comparison, the system ensures precise, explainable, and context-aware selection of secure alternatives, reducing the risk of vulnerabilities introduced by direct execution of unverified generated code.

In some embodiments, the system may select the first secured code subset corresponding to the first generated code subset by parsing the first generated code subset into a first abstract syntax tree, determining a first abstract syntax tree element, and comparing the first abstract syntax tree element to a plurality of approved abstract syntax tree. For example, the system may select a first secured code subset corresponding to a first generated code subset by leveraging abstract syntax tree (AST) analysis to conduct granular structural comparisons between untrusted generated code and pre-approved secure templates. The process begins by parsing the first generated code subset into a first abstract syntax tree, which provides a hierarchical, structured representation of the code's syntax and logic. The system then traverses this AST to determine a first abstract syntax tree element-such as a function call, control flow statement, variable assignment, or expression node-that represents a distinct logical or operational unit within the code.

Once the system isolates this first AST element, it proceeds to compare it to a plurality of approved abstract syntax trees, each corresponding to vetted secure code patterns stored in a policy-defined repository. This comparison is done using syntactic and semantic matching techniques that assess node types, relationships, and execution intent. The goal is to identify whether the element in the generated AST is structurally and functionally similar to any component of the secured ASTs. If a match or close analog is found-indicating that the generated element performs a comparable task to an approved secure pattern-the system selects the corresponding secured code subset associated with the matched AST as a safe replacement or transformation target. By conducting AST element-level analysis, the system ensures that code selection is not only accurate but also contextually aware, capturing subtle distinctions between unsafe and safe implementations of similar logic. This method enables the system to enforce code safety at a fine-grained level while preserving the original functionality of the generated code.

In some embodiments, the system may select the first secured code subset corresponding to the first generated code subset by retrieving the plurality of secured code subsets and comparing the first generated code subset to the plurality of secured code subsets to select the first secured code subset, from the plurality of secured code subsets, corresponding to the first generated code subset. For example, the system may select a first secured code subset corresponding to a first generated code subset by performing a retrieval-and-comparison process against a repository of secured code subsets. Initially, the system retrieves the plurality of secured code subsets from a pre-established library or database containing vetted, policy-compliant code patterns that represent secure implementations of common functions or logic blocks. These subsets are curated to align with best practices and security guidelines, serving as trusted templates for various programming tasks.

Once the secured code subsets are retrieved, the system then compares the first generated code subset to each of the secured code subsets using one or more comparison techniques, such as syntax pattern matching, semantic analysis, control-flow equivalence, or abstract syntax tree (AST) similarity. The goal of this comparison is to identify a secured code subset that mirrors the intended functionality and structural characteristics of the generated subset while conforming to security and compliance requirements. This comparison may involve evaluating whether the same operations are performed, whether approved libraries and tool calls are used, and whether safety mechanisms like input validation or error handling are present.

Upon finding a sufficiently close match, the system selects the first secured code subset from the plurality of candidates as the secure counterpart to the original, potentially unverified generated code. This selected subset can then be used to replace or inform a transformation of the generated code, ensuring that the resulting implementation meets both functional and security standards. This retrieval-based method allows the system to efficiently enforce secure coding practices by grounding code generation in a library of trusted implementations.

In some embodiments, the system may select the first secured code subset corresponding to the first generated code subset by parsing the first generated code subset into a first abstract syntax tree, parsing one or more of the plurality of secured code subsets into a second abstract syntax tree, and comparing the first abstract syntax tree to the second abstract syntax tree. For example, the system may select a first secured code subset corresponding to a first generated code subset by leveraging abstract syntax tree (AST) comparisons to assess structural and functional similarity between unverified and approved code. This process begins when the system parses the first generated code subset into a first abstract syntax tree, translating the code into a hierarchical representation that reflects its syntactic structure and execution logic. In parallel, the system parses one or more of the plurality of secured code subsets into second abstract syntax trees, each representing a vetted, secure version of a specific programming task or functionality.

Once both the first and second ASTs are constructed, the system performs a comparative analysis between the first AST and each of the second ASTs. This comparison may involve examining node types, control the data flow, function calls, and structural patterns to evaluate whether the generated code exhibits similar behavior to any of the secured alternatives. The system may use tree similarity metrics, pattern matching, or semantic equivalence techniques to identify which secured AST most closely aligns with the structure and intent of the generated code.

Upon determining the best match, the system selects the corresponding secured code subset-the one whose AST most closely matches the generated AST-as a safe and policy-compliant alternative. This selected subset can then be used to replace the original generated code or serve as a reference for transformation. By grounding the comparison at the AST level, the system ensures precise alignment between the generated and secured code while enforcing strict safety and correctness constraints.

In some embodiments, the system may select the first secured code subset corresponding to the first generated code subset by parsing the first generated code subset into a first abstract syntax tree, determining a first abstract syntax tree element, and comparing the first abstract syntax tree element to a plurality of approved abstract syntax tree. For example, the system may select a first secured code subset corresponding to a first generated code subset by performing a fine-grained structural analysis using abstract syntax trees (ASTs). The process begins with the system parsing the first generated code subset into a first abstract syntax tree, which provides a detailed hierarchical representation of the code's logical and syntactic structure. Once this AST is constructed, the system identifies and determines a first abstract syntax tree element-such as a specific function call, conditional block, or expression-that represents a discrete operational component of the code.

Next, the system compares this identified AST element to a plurality of approved abstract syntax trees, which represent secure and pre-validated code patterns for similar tasks or behaviors. Each approved AST serves as a template for secure coding practices, encompassing acceptable operations, structure, and constraints. The comparison involves checking for structural and semantic alignment between the generated AST element and the elements within these approved ASTs. If a sufficiently close match is found, indicating that the generated element performs a similar function to an approved, secure version, the system selects the secured code subset associated with the matching approved AST.

This selected secured code subset can then be used to replace or refactor the original generated code, ensuring that the implementation aligns with established security policies and functional correctness. This element-level comparison enables the system to enforce security at a granular level, allowing precise substitution or transformation while preserving the intended behavior of the code.

In some embodiments, the system may select the first secured code subset corresponding to the first generated code subset by retrieving the plurality of secured code subsets and comparing the first generated code subset to the plurality of secured code subsets to select the first secured code subset, from the plurality of secured code subsets, corresponding to the first generated code subset. For example, the system may select a first secured code subset corresponding to a first generated code subset by leveraging a retrieval-and-comparison approach using a curated repository of trusted code samples. This process begins when the system retrieves a plurality of secured code subsets from a database or library that contains pre-approved, policy-compliant implementations of various programming functionalities. Each secured code subset in this collection is designed to address a specific task or pattern while adhering to established security standards and safe coding practices.

Once the repository is loaded, the system compares the first generated code subset-which may contain unverified or potentially unsafe logic-with each of the secured code subsets. This comparison may involve analyzing syntax, structural patterns, control flow, function usage, and semantic intent to identify the most similar or functionally equivalent match. Advanced comparison techniques, such as abstract syntax tree (AST) matching, token-based similarity scoring, or semantic vector embeddings, may be used to enhance accuracy and precision.

After completing the comparison, the system selects the first secured code subset from the plurality of secured candidates that most closely aligns with the structure and purpose of the generated code. This selected subset is then used as a safe replacement or transformation guide, ensuring that the final implementation maintains the intended behavior while conforming to security policies. This retrieval-based strategy enables the system to reliably substitute unsafe or ambiguous generated code with vetted alternatives, thereby enhancing both safety and consistency in code execution.

In some embodiments, the system may select the first secured code subset corresponding to the first generated code subset by parsing the first generated code subset to extract an abstract syntax tree, converting the abstract syntax tree into a target abstract syntax tree, and translating the target abstract syntax tree into code in a target language. For example, the system may select a first secured code subset corresponding to a first generated code subset by performing a multi-step transformation process involving abstract syntax tree (AST) analysis and translation. First, the system parses the first generated code subset to extract an abstract syntax tree, which provides a structured, hierarchical representation of the code's syntax and semantics. This AST serves as an intermediate form that abstracts away surface-level syntax while preserving the logical structure of the program.

Next, the system converts the extracted AST into a target abstract syntax tree-a transformed version that adheres to a predefined safe grammar or conforms to a specific execution policy. This conversion process involves replacing or rewriting any unsafe, non-compliant, or disallowed constructs found in the original AST with equivalent elements that meet the system's security and functional requirements. For example, unsafe function calls, unrestricted loops, or unapproved imports may be replaced with secure alternatives or removed entirely during this transformation phase.

Once the target AST has been generated and validated, the system then translates the target abstract syntax tree into code in a target language, effectively producing a first secured code subset. This output may be written in the same language as the input (e.g., Python-to-secure-Python), or it may be cross-compiled into a different language depending on system requirements. The resulting secured code maintains the original intent of the generated subset while ensuring it is safe, compliant, and suitable for execution in controlled environments. This end-to-end process allows the system to preserve functionality while enforcing strict security policies through structured code transformation.

At step 410, process 400 (e.g., using one or more components described above) generates the secured code sample. For example, the system may generate the first secured code sample based on the first generated code subset. The system may generate the first secured code sample based on the first generated code subset by transforming the unverified or potentially unsafe code into a safe and compliant version that maintains its intended functionality. This begins with the system analyzing the first generated code subset-typically using parsing techniques to understand its structure and semantics-often by constructing an abstract syntax tree (AST). The system then evaluates this code against a set of predefined security policies, safe grammar rules, and approved coding patterns to identify any unsafe constructs, such as unauthorized API calls, insecure data handling, infinite loops, or improper resource management.

Once unsafe elements are identified, the system replaces or rewrites them using trusted, policy-compliant alternatives sourced from a library of secured code subsets. This transformation may involve applying code rewrites, substituting approved function calls, introducing input validation, or enforcing access control mechanisms. The system then assembles these secure components, preserving the logical flow and outcome of the original code while embedding necessary safety checks and constraints. The final output is the first secured code sample-a synthesized version of the original code subset that has been modified to conform with security and operational standards. This process ensures that the generated code can be safely executed in production environments without compromising functionality or violating security protocols.

In some embodiments, the system may generate the first secured code sample based on the first generated code subset by determining a construct of the first generated code subset and generating transpiled code based on the construct. For example, the system may generate the first secured code sample based on the first generated code subset by identifying key structural elements-referred to as constructs-within the generated subset and using them as the foundation for generating a secure, transformed version of the code. The process begins by parsing the first generated code subset and determining its constructs, such as variable assignments, control flow statements, function calls, loops, and expressions. Each construct represents a fundamental unit of program logic that can be analyzed and manipulated independently.

Once the constructs are identified, the system applies transformation rules or mappings to each one, generating transpiled code that preserves the original intent but adheres to predefined safety and compliance standards. For example, a function call to an external API may be rewritten to include parameter validation, timeout constraints, or credential masking. Similarly, a loop construct might be modified to include exit conditions or resource usage limits. This transpilation process ensures that each construct in the generated code is converted into a secure equivalent that fits within an approved grammar or execution model.

The resulting transpiled constructs are then assembled into the first secured code sample, which retains the original functionality of the generated subset while incorporating engineering and security controls. This methodical, construct-driven transpilation approach allows the system to enforce fine-grained safety policies and generate robust, execution-ready code that aligns with both functional and security requirements.

In some embodiments, the system may generate the first secured code sample based on the first generated code subset by determining a first node and a second node in the first generated code subset, wherein the first node is executed prior to the second node in the first generated code subset and generating a code path that executes the first function at the first node prior to executing a second function at the second node. For example, the system may generate the first secured code sample based on the first generated code subset by analyzing the program's control flow and identifying the sequence in which operations are executed. Specifically, the system begins by determining a first node and a second node within the first generated code subset, where each node represents a distinct operation or function-such as API calls, conditional logic, or data manipulation steps. These nodes are derived from parsing the code into an abstract syntax tree (AST) or a control flow graph, which allows the system to understand the logical ordering and dependencies between different parts of the code.

Once the system identifies that the first node is executed prior to the second node in the original subset, it preserves this execution order by generating a code path that explicitly enforces this sequencing in the secured version. In doing so, the system ensures that the first function associated with the first node is executed before the second function at the second node, maintaining the logical integrity of the original workflow. While preserving this order, the system also applies any necessary safety modifications-such as wrapping function calls in validation routines, enforcing resource constraints, or introducing error handling mechanisms-thereby transforming the code into a secured version without altering its operational intent.

This approach enables the system to generate a first secured code sample that not only satisfies security and compliance requirements but also faithfully reproduces the original execution flow of the generated code. By maintaining the correct sequence of operations, the system ensures functional accuracy while embedding the controls necessary for safe execution in sensitive or networked environments.

At step 412, process 400 (e.g., using one or more components described above) executes the secured code sample. For example, the system may execute the first secured code sample to perform a first function corresponding to the first secured characteristic. The system may execute the first secured code sample to perform a first function corresponding to the first secured characteristic by loading the validated and transformed code into a secure execution environment and initiating its runtime behavior. The first secured characteristic-such as secure data retrieval, authenticated communication, or controlled tool invocation-defines the intended outcome of the function. Once the secured code sample has been generated, incorporating all necessary safety controls and policy-compliant logic, the system transfers it to a runtime component, such as a sandboxed interpreter or virtual machine, where it is safely executed.

During execution, the system ensures that the secured code adheres to preconfigured runtime constraints, such as timeouts, memory limits, and restricted API access, to prevent unauthorized behavior or resource misuse. The secured code sample then performs the first function by executing its defined instructions in the intended sequence-for example, sending a properly authenticated API request, processing input data with validation, or querying a database using a predefined access method. Throughout the execution, the system may monitor the process for compliance and capture logs, output values, or error states.

This controlled execution framework guarantees that the first function is carried out in alignment with the original secured characteristic, achieving the desired outcome while maintaining operational safety, consistency, and accountability. By embedding safeguards directly into the secured code and executing it within a restricted environment, the system enables secure and reliable fulfillment of sensitive or critical tasks.

In some embodiments, the system may execute the first secured code sample by determining a first output based on executing the first secured code sample, comparing the first output to a labeled output for the first function, and determining to regenerate the first generated code sample based on comparing the first output to the labeled output.

In some embodiments, the system may execute the first secured code sample by determining a first output based on executing the first secured code sample and generating for display, on a user interface, a first recommendation based on the first output. For example, the system may execute the first secured code sample by first initiating its controlled runtime execution in a secure environment to produce a first output, which reflects the result of performing the function defined by the code. This output may include return values, logs, external responses, or changes to system state, depending on the nature of the task. Once the first output is obtained, the system compares it to a labeled output-a predefined, expected result that corresponds to the correct behavior of the first function based on the first secured characteristic. This labeled output serves as a benchmark for validating the correctness and completeness of the executed code.

If the system detects a mismatch between the first output and the labeled output-such as incorrect data formatting, missing return values, or unexpected side effects-it interprets this as an indication that the code sample may not have accurately implemented the intended function. Based on this comparison, the system determines to regenerate the first generated code sample, either by prompting the original model to revise the code or by automatically modifying specific parts of the code based on feedback. This regeneration loop helps refine the output by correcting logical errors, improving alignment with functional requirements, and ensuring that subsequent executions move closer to producing the desired labeled output.

Through this iterative approach, the system combines execution, validation, and code refinement to reliably achieve a functionally correct and secure implementation of the original task request. This mechanism is particularly useful in systems involving large language models, where initial outputs may be approximate and require structured feedback to converge on an acceptable result.

In some embodiments, the system may execute the first secured code sample by determining a function call for an action plan and generating for display, on a user interface, a first result for the action plan based on the function call. For example, the system may execute the first secured code sample by identifying a function call embedded within the code that corresponds to an operation defined in an action plan-a structured sequence of tasks designed to fulfill a user request. Upon execution, the system parses and interprets the secured code to locate the specific function call that initiates the target action, such as querying a database, invoking a web API, or interacting with a local service. This function call encapsulates the logic needed to perform the core task associated with the user's intent.

Once the function is called and executed within the secured runtime environment, the system processes the outcome and uses the result to generate a first result for the action plan. This result may include computed data, status updates, or confirmation messages, depending on what the function is designed to return. The system then generates this result for display on a user interface, presenting it in a user-friendly format such as a textual summary, data table, or graphical visualization. By doing so, the system closes the loop between code execution and user interaction, enabling the user to see the effect of the action plan in real time. This workflow ensures that the action derived from the secured code not only executes safely and correctly but also produces a tangible, interpretable outcome for the end user.

In some embodiments, the system may execute the first secured code sample by generating first feedback for the first model based on the first secured code sample and re-training the first model using the first feedback. For example, the system may execute the first secured code sample and subsequently generate first feedback for the first model by evaluating the behavior and output of the code during or after execution. This feedback process begins by monitoring the runtime execution of the secured code, capturing outcomes such as return values, performance metrics, exceptions, or any deviations from expected behavior. The system then analyzes this execution data in the context of the original functional intent and security policies to assess whether the code performed correctly, safely, and efficiently.

Based on this analysis, the system generates first feedback-a structured evaluation that may include success indicators, error classifications, unsafe pattern detections, or suggestions for improvement. This feedback is then linked back to the first model that originally generated the code, providing it with actionable insights about where the output succeeded or failed. The system can use this feedback to re-train the first model, either in real time or through periodic fine-tuning, enabling the model to learn from its past outputs. By incorporating the feedback into the model's training data or adjusting its weights, the system helps the model generate more accurate, secure, and contextually appropriate code in future tasks. This continuous feedback and learning loop enhances the reliability and safety of AI-assisted code generation over time.

In some embodiments, the system may receive another user request to generate a second secured code sample, wherein the second secured code sample comprises a second secured characteristic, and wherein the second secured code sample is written in a second code language and convert the second secured code sample from the second code language to the first code language. For example, the system may receive another user request to generate a second secured code sample by accepting a new input-such as a prompt or configuration-describing a distinct task or function, where the implementation must satisfy a second secured characteristic. This characteristic could relate to a different type of security requirement, such as encrypted data transmission, access control enforcement, or compliance with domain-specific constraints. In response to this request, the system generates a second secured code sample that satisfies the new characteristic, but this time it is written in a second code language (e.g., JavaScript, Java, or C++) depending on user preference or system requirements.

Once the second secured code sample is created, the system may be tasked with making it interoperable with environments expecting the first code language (e.g., Python). To achieve this, the system uses a code transpilation or translation mechanism to convert the second secured code sample from the second code language to the first code language. This involves parsing the second code sample into an abstract syntax tree (AST), preserving the logical structure and semantics of the original code, and then generating an equivalent representation using the syntax and conventions of the first language. During this process, the system also ensures that all security properties of the second secured characteristic are preserved or appropriately adapted in the converted output. This translation enables seamless integration of secure logic across heterogeneous programming environments while maintaining functional consistency and adherence to the original security requirements.

In some embodiments, the system may parse the first generated code sample to determine a second generated code subset in the first generated code sample, select a second secured code subset corresponding to the second generated code subset, and generate a second secured code sample based on the second generated code subset. For example, the system may parse the first generated code sample to determine a second generated code subset by first analyzing the structure of the code through syntactic parsing and construction of an abstract syntax tree (AST). This tree provides a hierarchical representation of the code's logic, allowing the system to isolate discrete components-such as functions, loops, or expressions-that perform individual tasks. From this structure, the system identifies the second generated code subset, which may represent a different function or logic block within the broader code sample, distinct from any previously identified subset.

Once the second generated code subset is extracted, the system proceeds to select a second secured code subset by comparing the newly identified code component against a repository of pre-approved, policy-compliant code patterns. This comparison may be based on structural similarity, functional intent, or known secure templates, allowing the system to match the second generated code subset with a vetted alternative that achieves the same outcome using secure practices.

After selecting the appropriate secure alternative, the system generates a second secured code sample by transforming the second generated code subset-either by directly replacing it with the selected secured code subset or by transpiling it using rules that embed safety checks, policy constraints, and compliance requirements. This results in a second secured code sample that preserves the intent of the original code while aligning with security and execution policies. The process ensures that each identified portion of the generated code can be individually analyzed, secured, and reconstructed into a safe and executable form.

It is contemplated that the steps or descriptions of FIG. 4 may be used with any other embodiment of this disclosure. In addition, the steps and descriptions described in relation to FIG. 4 may be done in alternative orders or in parallel to further the purposes of this disclosure. For example, each of these steps may be performed in any order, in parallel, or simultaneously to reduce lag or increase the speed of the system or method. Furthermore, it should be noted that any of the components, devices, or equipment discussed in relation to the figures above could be used to perform one or more of the steps in FIG. 4.

The above-described embodiments of the present disclosure are presented for purposes of illustration and not of limitation, and the present disclosure is limited only by the claims which follow. Furthermore, it should be noted that the features and limitations described in any one embodiment may be applied to any embodiment herein, and flowcharts or examples relating to one embodiment may be combined with any other embodiment in a suitable manner, done in different orders, or done in parallel. In addition, the systems and methods described herein may be performed in real time. It should also be noted that the systems and/or methods described above may be applied to, or used in accordance with, other systems and/or methods.

The present techniques will be better understood with reference to the following enumerated embodiments:
1. A method for generating secured data samples for executing secured computer network functions.
2. The method the preceding embodiment, the method further comprising: receiving a user request to generate a first secured code sample, wherein the first secured code sample comprises a first secured characteristic, and wherein the first secured code sample comprises a plurality of secured code subsets written in a first code language; inputting the first secured characteristic into a first model to determine a first generated code sample; parsing the first generated code sample to determine a first generated code subset in the first generated code sample; selecting a first secured code subset corresponding to the first generated code subset; generating the first secured code sample based on the first generated code subset; and executing the first secured code sample to perform a first function corresponding to the first secured characteristic.
3. The method of one or more of the preceding embodiments, wherein executing the first secured code sample further comprises: determining a first output based on executing the first secured code sample; comparing the first output to a labeled output for the first function; and determining to regenerate the first generated code sample based on comparing the first output to the labeled output.
4. The method of one or more of the preceding embodiments, wherein executing the first secured code sample further comprises: determining a first output based on executing the first secured code sample; and generating for display, on a user interface, a first recommendation based on the first output.
5. The method of one or more of the preceding embodiments, wherein executing the first secured code sample further comprises: determining a function call for an action plan; and generating for display, on a user interface, a first result for the action plan based on the function call.
6. The method of one or more of the preceding embodiments, wherein executing the first secured code sample further comprises: generating first feedback for the first model based on the first secured code sample; and re-training the first model using the first feedback.
7. The method of one or more of the preceding embodiments, wherein parsing the first generated code sample to determine the first generated code subset in the first generated code sample further comprises: determining a function in the first generated code sample; determining a boundary for the function in the first generated code sample; and using the boundary to determine the first generated code subset.
8. The method of one or more of the preceding embodiments, wherein selecting the first secured code subset corresponding to the first generated code subset further comprises: parsing the first generated code subset into a first abstract syntax tree; parsing one or more of the plurality of secured code subsets into a second abstract syntax tree; and comparing the first abstract syntax tree to the second abstract syntax tree.
9. The method of one or more of the preceding embodiments, wherein selecting the first secured code subset corresponding to the first generated code subset further comprises: parsing the first generated code subset into a first abstract syntax tree; determining a first abstract syntax tree element; and comparing the first abstract syntax tree element to a plurality of approved abstract syntax tree.
10. The method of one or more of the preceding embodiments, wherein selecting the first secured code subset corresponding to the first generated code subset further comprises: retrieving the plurality of secured code subsets; and comparing the first generated code subset to the plurality of secured code subsets to select the first secured code subset, from the plurality of secured code subsets, corresponding to the first generated code subset.
11. The method of one or more of the preceding embodiments, wherein generating the first secured code sample based on the first generated code subset further comprises: determining a construct of the first generated code subset; and generating transpiled code based on the construct.
12. The method of one or more of the preceding embodiments, wherein generating the first secured code sample based on the first generated code subset further comprises: determining a first node and a second node in the first generated code subset, wherein the first node is executed prior to the second node in the first generated code subset; and generating a code path that executes the first function at the first node prior to executing a second function at the second node.
13. The method of one or more of the preceding embodiments, wherein selecting the first secured code subset corresponding to the first generated code subset further comprises: parsing the first generated code subset to extract an abstract syntax tree; converting the abstract syntax tree into a target abstract syntax tree; and translating the target abstract syntax tree into code in a target language.
14. The method of one or more of the preceding embodiments, wherein inputting the first secured characteristic into the first model to determine the first generated code sample further comprises: generating a first prompt based on the first secured characteristic; and inputting the first prompt into the first model, wherein the first model comprises a large language model.
15. The method of one or more of the preceding embodiments, wherein inputting the first secured characteristic into the first model to determine the first generated code sample further comprises: receiving training data comprising historical samples of secured code samples; and training the first model using the training data.
16. The method of one or more of the preceding embodiments, further comprising: receiving another user request to generate a second secured code sample, wherein the second secured code sample comprises a second secured characteristic, and wherein the second secured code sample is written in a second code language; and converting the second secured code sample form the second code language to the first code language.
17. The method of one or more of the preceding embodiments, further comprising: parsing the first generated code sample to determine a second generated code subset in the first generated code sample; selecting a second secured code subset corresponding to the second generated code subset; and generating a second secured code sample based on the second generated code subset.
18. One or more non-transitory, computer-readable mediums storing instructions that, when executed by a data processing apparatus, cause the data processing apparatus to perform operations comprising those of any of embodiments 1-17.
19. A system comprising one or more processors; and memory storing instructions that, when executed by the processors, cause the processors to effectuate operations comprising those of any of embodiments 1-17.
20. A system comprising means for performing any of embodiments 1-17.

Various examples are set out in the following numbered paragraphs (NP)
NP 1. A system for generating secured data samples for executing secured computer network functions, the system comprising:
   one or more processors; and
   one or more non-transitory, computer-readable media comprising instructions when executed by the one or more processors cause operations comprising:
      receiving a user request to generate a secured data sample, wherein the secured data sample comprises a secured data characteristic for executing a secured computer network function, and wherein the secured data sample comprises a plurality of secured data subsets written in a data language;
      inputting the secured data characteristic into a model to determine a generated data sample;
      parsing the generated data sample to determine a generated data subset in the generated data sample;
      comparing the generated data subset to the plurality of secured data subsets to select a secured data subset, from the plurality of secured data subsets, corresponding to the generated data subset;
      generating the secured data sample based on the generated data subset; and
      executing the secured data sample to perform a computer network function corresponding to the secured data characteristic, wherein the computer network function comprises generating an external application programming interface call to an external data source.
NP 2. A method for generating secured data samples for executing secured computer network functions, the method comprising:
   receiving a user request to generate a first secured code sample, wherein the first secured code sample comprises a first secured characteristic, and wherein the first secured code sample comprises a plurality of secured code subsets written in a first code language;
   inputting the first secured characteristic into a first model to determine a first generated code sample;
   parsing the first generated code sample to determine a first generated code subset in the first generated code sample;
   selecting a first secured code subset corresponding to the first generated code subset;
   generating the first secured code sample based on the first generated code subset; and
   executing the first secured code sample to perform a first function corresponding to the first secured characteristic.
NP 3. The method of NP 2, wherein executing the first secured code sample further comprises:
   determining a first output based on executing the first secured code sample;
   comparing the first output to a labeled output for the first function; and
   determining to regenerate the first generated code sample based on comparing the first output to the labeled output.
NP 4. The method of NP 2, wherein executing the first secured code sample further comprises:
   determining a first output based on executing the first secured code sample; and
   generating for display, on a user interface, a first recommendation based on the first output.
NP 5. The method of NP 2, wherein executing the first secured code sample further comprises:
   determining a function call for an action plan; and
   generating for display, on a user interface, a first result for the action plan based on the function call.
NP 6. The method of NP 2, wherein executing the first secured code sample further comprises:
   generating first feedback for the first model based on the first secured code sample; and
   re-training the first model using the first feedback.
NP 7. The method of NP 2, wherein parsing the first generated code sample to determine the first generated code subset in the first generated code sample further comprises:
   determining a function in the first generated code sample;
   determining a boundary for the function in the first generated code sample; and
   using the boundary to determine the first generated code subset.
NP 8. The method of NP 2, wherein selecting the first secured code subset corresponding to the first generated code subset further comprises:
   parsing the first generated code subset into a first abstract syntax tree;
   parsing one or more of the plurality of secured code subsets into a second abstract syntax tree; and
   comparing the first abstract syntax tree to the second abstract syntax tree.
NP 9. The method of NP 2, wherein selecting the first secured code subset corresponding to the first generated code subset further comprises:
   parsing the first generated code subset into a first abstract syntax tree;
   determining a first abstract syntax tree element; and
   comparing the first abstract syntax tree element to a plurality of approved abstract syntax tree.
NP 10. The method of NP 2, wherein selecting the first secured code subset corresponding to the first generated code subset further comprises:
   retrieving the plurality of secured code subsets; and
   comparing the first generated code subset to the plurality of secured code subsets to select the first secured code subset, from the plurality of secured code subsets, corresponding to the first generated code subset.
NP 11. The method of NP 2, wherein generating the first secured code sample based on the first generated code subset further comprises:
   determining a construct of the first generated code subset; and
   generating transpiled code based on the construct.
NP 12. The method of NP 2, wherein generating the first secured code sample based on the first generated code subset further comprises:
   determining a first node and a second node in the first generated code subset, wherein the first node is executed prior to the second node in the first generated code subset; and
   generating a code path that executes the first function at the first node prior to executing a second function at the second node.
NP 13. The method of NP 2, wherein selecting the first secured code subset corresponding to the first generated code subset further comprises:
   parsing the first generated code subset to extract an abstract syntax tree;
   converting the abstract syntax tree into a target abstract syntax tree; and
   translating the target abstract syntax tree into code in a target language.
NP 14. The method of NP 2, wherein inputting the first secured characteristic into the first model to determine the first generated code sample further comprises:
   generating a first prompt based on the first secured characteristic; and
   inputting the first prompt into the first model, wherein the first model comprises a large language model.
NP 15. The method of NP 2, wherein inputting the first secured characteristic into the first model to determine the first generated code sample further comprises:
   receiving training data comprising historical samples of secured code samples; and
   training the first model using the training data.
NP 16. The method of NP 2, further comprising:
   receiving another user request to generate a second secured code sample, wherein the second secured code sample comprises a second secured characteristic, and wherein the second secured code sample is written in a second code language; and
   converting the second secured code sample form the second code language to the first code language.
NP 17. The method of NP 2, further comprising:
   parsing the first generated code sample to determine a second generated code subset in the first generated code sample;
   selecting a second secured code subset corresponding to the second generated code subset; and
   generating a second secured code sample based on the second generated code subset.
NP 18. One or more non-transitory, computer-readable media, comprising instructions that, when executed by one or more processors, cause operations comprising:
   receiving a first secured characteristic;
   inputting the first secured characteristic into a first model to determine a first generated code sample;
   parsing the first generated code sample to determine a first generated code subset in the first generated code sample;
   selecting a first secured code subset, corresponding to the first generated code subset, to use to generate a first secured code sample, wherein the first secured code sample comprises a plurality of secured code subsets written in a first code language; and
   executing the first secured code sample to perform a first function corresponding to the first secured characteristic.
NP 19. The one or more non-transitory, computer-readable media of NP 18, wherein generating the first secured code sample further comprises:
   determining a first node and a second node in the first generated code subset, wherein the first node is executed prior to the second node in the first generated code subset; and
   generating a code path that executes the first function at the first node prior to executing a second function at the second node.
NP 20. The one or more non-transitory, computer-readable media of NP 18, wherein selecting the first secured code subset further comprises:
   parsing the first generated code subset to extract an abstract syntax tree;
   converting the abstract syntax tree into a target abstract syntax tree; and
   translating the target abstract syntax tree into code in a target language.

## Claims

1. A system for generating secured data samples for executing secured computer network functions, the system comprising:
one or more processors; and
one or more non-transitory, computer-readable media comprising instructions when executed by the one or more processors cause operations comprising:
receiving a user request to generate a secured data sample, wherein the secured data sample comprises a secured data characteristic for executing a secured computer network function, and wherein the secured data sample comprises a plurality of secured data subsets written in a data language;
inputting the secured data characteristic into a model to determine a generated data sample;
parsing the generated data sample to determine a generated data subset in the generated data sample;
comparing the generated data subset to the plurality of secured data subsets to select a secured data subset, from the plurality of secured data subsets, corresponding to the generated data subset;
generating the secured data sample based on the generated data subset; and
executing the secured data sample to perform a computer network function corresponding to the secured data characteristic, wherein the computer network function comprises generating an external application programming interface call to an external data source.

2. A method for generating secured data samples for executing secured computer network functions, the method comprising:
receiving a user request to generate a first secured code sample, wherein the first secured code sample comprises a first secured characteristic, and wherein the first secured code sample comprises a plurality of secured code subsets written in a first code language;
inputting the first secured characteristic into a first model to determine a first generated code sample;
parsing the first generated code sample to determine a first generated code subset in the first generated code sample;
selecting a first secured code subset corresponding to the first generated code subset;
generating the first secured code sample based on the first generated code subset; and
executing the first secured code sample to perform a first function corresponding to the first secured characteristic.

3. The method of claim 2, wherein executing the first secured code sample further comprises:
(a) determining a first output based on executing the first secured code sample, comparing the first output to a labeled output for the first function, and determining to regenerate the first generated code sample based on comparing the first output to the labeled output; or
(b) determining a first output based on executing the first secured code sample, and generating for display, on a user interface, a first recommendation based on the first output.

4. The method of claim 2, wherein executing the first secured code sample further comprises:
(a) determining a function call for an action plan, and generating for display, on a user interface, a first result for the action plan based on the function call; or
(b) generating first feedback for the first model based on the first secured code sample, and re-training the first model using the first feedback.

5. The method of claim 2, wherein parsing the first generated code sample to determine the first generated code subset in the first generated code sample further comprises:
determining a function in the first generated code sample;
determining a boundary for the function in the first generated code sample; and
using the boundary to determine the first generated code subset.

6. The method of claim 2, wherein selecting the first secured code subset corresponding to the first generated code subset further comprises:
(a) parsing the first generated code subset into a first abstract syntax tree, parsing one or more of the plurality of secured code subsets into a second abstract syntax tree, and comparing the first abstract syntax tree to the second abstract syntax tree; or
(b) parsing the first generated code subset into a first abstract syntax tree, determining a first abstract syntax tree element, and comparing the first abstract syntax tree element to a plurality of approved abstract syntax tree.

7. The method of claim 2, wherein selecting the first secured code subset corresponding to the first generated code subset further comprises:
retrieving the plurality of secured code subsets; and
comparing the first generated code subset to the plurality of secured code subsets to select the first secured code subset, from the plurality of secured code subsets, corresponding to the first generated code subset.

8. The method of claim 2, wherein generating the first secured code sample based on the first generated code subset further comprises:
(a) determining a construct of the first generated code subset, and generating transpiled code based on the construct; or
(b) determining a first node and a second node in the first generated code subset, wherein the first node is executed prior to the second node in the first generated code subset, and generating a code path that executes the first function at the first node prior to executing a second function at the second node.

9. The method of claim 2, wherein selecting the first secured code subset corresponding to the first generated code subset further comprises:
parsing the first generated code subset to extract an abstract syntax tree;
converting the abstract syntax tree into a target abstract syntax tree; and
translating the target abstract syntax tree into code in a target language.

10. The method of claim 2, wherein inputting the first secured characteristic into the first model to determine the first generated code sample further comprises:
(a) generating a first prompt based on the first secured characteristic, and inputting the first prompt into the first model, wherein the first model comprises a large language model; or
(b) receiving training data comprising historical samples of secured code samples, and training the first model using the training data.

11. The method of claim 2, further comprising:
receiving another user request to generate a second secured code sample, wherein the second secured code sample comprises a second secured characteristic, and wherein the second secured code sample is written in a second code language; and
converting the second secured code sample form the second code language to the first code language.

12. The method of claim 2, further comprising:
parsing the first generated code sample to determine a second generated code subset in the first generated code sample;
selecting a second secured code subset corresponding to the second generated code subset; and
generating a second secured code sample based on the second generated code subset.

13. One or more non-transitory, computer-readable media, comprising instructions that, when executed by one or more processors, cause operations comprising:
receiving a first secured characteristic;
inputting the first secured characteristic into a first model to determine a first generated code sample;
parsing the first generated code sample to determine a first generated code subset in the first generated code sample;
selecting a first secured code subset, corresponding to the first generated code subset, to use to generate a first secured code sample, wherein the first secured code sample comprises a plurality of secured code subsets written in a first code language; and
executing the first secured code sample to perform a first function corresponding to the first secured characteristic.

14. The one or more non-transitory, computer-readable media of claim 13, wherein generating the first secured code sample further comprises:
determining a first node and a second node in the first generated code subset, wherein the first node is executed prior to the second node in the first generated code subset; and
generating a code path that executes the first function at the first node prior to executing a second function at the second node.

15. The one or more non-transitory, computer-readable media of claim 13, wherein selecting the first secured code subset further comprises:
parsing the first generated code subset to extract an abstract syntax tree;
converting the abstract syntax tree into a target abstract syntax tree; and
translating the target abstract syntax tree into code in a target language.
